# EUROPÄISCHE PATENTSCHRIFT

(11) **EP 3 944 158 B1**
(45) Veröffentlichungstag und Bekanntmachung des Hinweises auf die Patenterteilung: **29.10.2025**
(21) Anmeldenummer: 20187076.3
(22) Anmeldetag: 21.07.2020
(51) Int. Cl.: G06N 3/08

(54) **COMPUTER-IMPLEMENTIERTES VERFAHREN FÜR MASCHINELLES LERNEN ZUM BETRIEB EINER FAHRZEUGKOMPONENTE UND VERFAHREN ZUM BETRIEB EINER FAHRZEUGKOMPONENTE**
COMPUTER-IMPLEMENTED METHOD FOR MACHINE LEARNING FOR OPERATING A VEHICLE COMPONENT AND METHOD FOR OPERATING A VEHICLE COMPONENT
PROCÉDÉ MIS EN UVRE PAR ORDINATEUR DESTINÉ À L'APPRENTISSAGE D'UNE MACHINE PERMETTANT DE FAIRE FONCTIONNER UN COMPOSANT DE VÉHICULE ET PROCÉDÉ DE FONCTIONNEMENT D'UN COMPOSANT DE VÉHICULE

(43) Veröffentlichungstag der Anmeldung: 26.01.2022
(73) Patentinhaber: Volkswagen Aktiengesellschaft, 38440 Wolfsburg (DE)
(72) Erfinder: Kaste, Jonas, 31061 Alfeld (Leine) (DE); van Ende, Kristof, 38102 Braunschweig (DE)

(56) Entgegenhaltungen:
- D T PHAM ET AL: "Technique for Selecting Examples in Inductive Learning", ESIT 2000, 14 September 2000 (2000-09-14), pages 1 - 9, XP055738950, Retrieved from the Internet <URL:http://citeseerx.ist.psu.edu/viewdoc/download?doi=10.1.1.4.8685&rep=rep1&type=pdf> [retrieved on 20201012]
- VAN ENDE K. ET AL: "Practicability study on the suitability of artificial, neural networks for the approximation of unknown steering torques", VEHICLE SYSTEM DYNAMICS: INTERNATIONAL JOURNAL OF VEHICLE MECHANICS AND MOBILITY, vol. 54, no. 10, 3 July 2016 (2016-07-03), GB, pages 1362 - 1383, XP093242758, ISSN: 0042-3114, DOI: 10.1080/00423114.2016.1202987

## Beschreibung

Die Erfindung betrifft ein Verfahren zum Betrieb eines Lenkrads eines Fahrzeugs. Ferner werden eine entsprechende Steuereinheit sowie ein entsprechendes Fahrzeug bereitgestellt.

Das Training bei maschinellen Lernverfahren des Standes der Technik zeigt Ineffizienzen bei ungleichverteilten Datensätzen mit über- oder unterrepräsentierten Szenarien. Dadurch kann es zu einer schlechten Performanz bei vorher nicht bekannten Daten kommen. Das hat wiederum zur Folge, dass die Robustheit der Methode sowie der Anwendbarkeit im sicherheitskritischen Umfeld deutlich beeinträchtigt ist.

Lediglich als weiterer technischer Hintergrund wird auf Stand der Technik verwiesen, welcher sich mit anderen, sehr speziellen Problemen bei sehr extremen Verteilungsmissverhältnissen zwischen sogenannten Minoritäts- und Majoritätsklassen im Ausgangsdatensatz beschäftigt. In der Veröffentlichung S. Yen et al., "Cluster-based under-sampling approaches for imbalanced data distributions", Expert System with Applications 36, 2009, pp. 5718-5727, doi:10.1016/j.eswa.2008.06.108 wird eine gewichtete Verteilung dieser seltenen Minoritätsklassen beschrieben. In der Veröffentlichung M. Mostafizur Rahman et al., "Cluster based under-sampling for unbalanced cardiovascular data", Proceedings of the World Congress on Engineering, 2013, Vol. III, ISSN: 2078-0966 (Online) wird ebenfalls dieser besondere Spezialfall der seltenen Minoritätsklassen behandelt. Dabei wird der Eingangsdatensatz nach Majoritätsklasse und Minoritätsklasse getrennt, wobei ein Clustering nur hinsichtlich der Majoritätsklassen erfolgt, und im Anschluss viele Datensätze durch Paarung jedes Clusters mit den Minoritätsklassen erzielt. Das beste Paar dieser Kombinationen wird dann als Trainingsdatensatz verwendet.

In der Veröffentlichung D. T. Pham et al: "Technique for selecting examples in inductive learning", ESIT 2000, 14. 9. 2000, Seiten 1-9, XP055738950, Gefunden im Internet: URL:http://citeseerx.ist.psu.edu/viewdoc/download?doi=10.1.1.4.8685&repl&tvpe=pdf werden verschiedene Verfahren zum Auswählen von Datenpunkten aus zuvor geclusterten Datenpunkten beschrieben. In Ausführungen werden Datenpunkte auf Basis eines Abstands zu einem Mittelpunkt des Clusters bestimmt. In einem weiteren darin beschriebenen Verfahren findet eine Reduktion von zufällig ausgewählten Datenpunkten in jedem Cluster nach einem vorgebbaren Prozentanteil statt.

In der Veröffentlichung K. van Ende et al.: "Practicability study on the suitability of artificial, neural networks for the approximation of unknown steering torques", Vehicle System Dynamics: international journal of vehicle mechanics and mobility, Bd. 54, Nr. 10, 3. Juli 2016, Seiten 1362-1383, XP093242758, wird ein Verfahren zum Betrieb eines Lenkrads eines Fahrzeugs unter Verwendung einer Ausgabe eines Algorithmus für maschinelles Lernen zur Lenkmomentapproximation offenbart.

Abgesehen von diesen speziellen Problemen werden im Stand der Technik Verfahren durchgeführt, bei welchen die Trainingsperformanz getestet und dann auf Basis von unabhängigen Daten validiert wird. Dabei werden typischerweise sehr große Trainingsdatensätze verwendet, welche das Zielverhalten abbilden.

Für große Datensätze entsteht ferner ein hoher Rechenaufwand aufgrund der großen Datensätze, der Datensatzaufbereitung wie beispielsweise Labeling, der Anonymisierung und erhöhte Rechenressourcen müssen für die Verarbeitung dieser großen Datenmengen für den Trainingsprozess bereitgestellt werden. Iterative, händische Datensatzgenerierung ist fehleranfällig und wegen Trial und Error häufig langsam. Auch die Berücksichtigung aller Daten führt zu einem sehr zeitaufwendigen und ineffektiven Training.

Ferner basiert die Analyse von Versagensfällen oftmals auf Expertenwissen. Die Schwierigkeiten liegen hier unter anderem sowohl an der Kopplung unterschiedlicher Ursachen als auch am komplexen Detektieren von Parametern. Der Lösungsansatz besteht zumeist darin, mehr Daten zu verwenden, um eine bessere Performanz zu erzielen. Es findet keine objektive Analyse des mehrdimensionalen Raumes statt. Um die Datensätze zu erweitern beziehungsweise zu vergrößern, findet eine Analyse von Experten statt.

Besonders das Gebiet der Fahrzeuge stellt einen sicherheitskritischen Bereich dar, in welchem verschiedenste Fahrzeugkomponenten mit hohen Sicherheitsanforderungen betrieben werden müssen. Eine hohe Performanz und schnelle Trainingszeiten sind besonders in diesem Bereich von entscheidender Bedeutung. Beim Betrieb von Fahrzeugkomponenten mit Unterstützung durch Algorithmen durch maschinelles Lernen ist der Trainingsdatensatz und die Performanz entscheidend mitunter darin, ob ein kritischer Fehler auftritt.

Der Erfindung liegt nun die Aufgabe zugrunde, ein Verfahren zum Betrieb eines Lenkrads gemäß Anspruch 1 bereitzustellen, welches zumindest einen Teil der oben genannten Probleme löst oder zumindest minimiert. Insbesondere liegt ein Aspekt der Erfindung darin, eine gute Performanz über alle Szenarien zu gewährleisten und zugleich eine zeit- und ressourcenschonende Erzeugung von Trainingsdatensätzen zu gewähren. Ferner ist ein Ziel, die Voraussetzungen für ein zeiteffizientes Training gepaart mit einer hohen Genauigkeit zu erzielen.

Ein multidimensionaler Datenpunkt kann durch einen Vektor repräsentiert werden und mit einer Vielzahl von Einträgen versehen sein. Die Menge der Datenpunkte kann eine Zeitreihe bilden. Der multidimensionale Datenpunkt umfasst physikalische beziehungsweise kinematische Größen wie Fahrzeuggeschwindigkeit, Ort, Orientierung, Lenkmoment, Querbeschleunigung, Gierrate, Lenkradwinkelgeschwindigkeit, Beschleunigung oder aber auch Trajektorien oder Trajektorienabschnitte, wobei die obigen Beispiele nur eine beispielhafte Auflistung sind und die Erfindung nicht darauf beschränkt ist. Datenpunkten sind grundsätzlich das Fahrzeug betreffende Messdatenpunkte, zum Beispiel Sensordatenpunkte, also Größen, welche durch Sensoren erfasst werden können. Beispielsweise kann auch der Reifendruck ein Eintrag des Datenpunktes sein. Die Datenpunkte können beispielsweise Sensorsignale sein. In anderen Fällen sind die Datenpunkte simulierte Daten oder von einem Server bereitgestellte Daten, die aus einem zuvor geschehenen Messprozess erlangt wurden. Die Sensorsignale können von einer Mehrzahl von Sensoren des Fahrzeugs erfasst werden, insbesondere von verschiedenen Sensoren des Fahrzeugs. Als Cluster-Algorithmus kann bevorzugt ein k-means-Algorithmus Anwendung finden. Jedoch hängt die Erfindung nicht von dem verwendeten Cluster-Algorithmus ab. Beispielsweise kann auch ein EM-Clustering oder ein Fuzzy-c-means-Algorithmus oder dergleichen verwendet werden. Jedes Cluster stellt ein bestimmtes Szenario dar. Ein Szenario stellt ferner eine eindeutig trennbare Teilmenge des gesamten Datensatzes dar. Ein Szenario kann dabei durch die multidimensionalen Eingänge des Clusteralgorithmus differenziert werden. Durch das Clustering werden automatisiert relevante Bereiche der gesamten unstrukturierten Datenbasis extrahiert. Ein Cluster-Algorithmus, welcher jeden Datenpunkt eindeutig einem Cluster zuordnet, wird auch als harte Methode bezeichnet. Daten sind physikalische und/oder kinematische Daten, welche zur Bestimmung einer Targetgröße beziehungsweise Sollgröße zum Betrieb einer Fahrzeugkomponente des Fahrzeug erforderlich sind.

Die Erfindung hat den Vorteil, dass eine automatische Gleichverteilung des Trainingsdatensatzes über die verschiedenen Szenarien erzeugt wird. Dies wird dadurch erzielt, dass genau gleichviele Datenpunkte aus den übrigen Clustern für den Trainingsdatensatz genommen werden. Die Orientierung am kleinsten Cluster ist vorteilhaft, da dieser ein Szenario darstellt, welches im Vergleich zu den anderen Clustern unterrepräsentiert ist aufgrund der geringen Anzahl an Datenpunkten. In dem neuen Trainingsdatensatz wird der vormals unterrepräsentierte Cluster gleich gewichtet beziehungsweise repräsentiert wie die anderen Cluster. Jeder Cluster und damit jedes Szenario wird somit vorteilhaft gleich berücksichtigt durch die erzeugte Gleichverteilung der Cluster basierend auf und hinsichtlich der Anzahl der Datenpunkte der vom Cluster-Algorithmus erzeugten Cluster. Durch die gezielte Reduktion der Datenpunkte kann ferner erheblich Trainingszeit eingespart werden und auch ein Datenpool von Test- und Validierungsdaten bereitgestellt werden. Der gleichverteilte Datensatz hat ferner bessere Performanz. Es wird hier und im Folgenden ein objektives Verfahren zur Berücksichtigung der multidimensionalen Analyse der Daten geschaffen, welche aufgrund der Komplexität und Mehrdimensionalität subjektiv kaum zu erfassen ist.

Weitere bevorzugte Ausgestaltungen der Erfindung ergeben sich aus den übrigen, in den Unteransprüchen genannten Merkmalen.

Das Verfahren umfasst das Abspeichern der nicht-ausgewählten Datenpunkte des kleinsten Clusters und/oder der übrigen Cluster in einem Datenspeicher als Test- und/oder Validierungsdaten. Diese nicht verwendeten Datenpunkte stellen somit einen Datenpool dar, welcher zum Testen und Validieren eines Algorithmus für maschinelles Lernen und dessen Performanz verwendet werden kann. Ferner werden die Datenpunkte zur Nachbesserung des Trainingsdatensatzes hinsichtlich der Cluster-Performanz verwendet, wie es weiter unten beschrieben wird. Wenn auch Datenpunkte aus dem kleinsten Cluster abgespeichert werden, so kann auch dessen Performanz geprüft werden.

In besonderer Ausführungsform umfasst das Verfahren das Auswählen der Gesamtheit aller Datenpunkte des kleinsten Clusters für den Trainingsdatensatz. Der kleinste Cluster des Basisdatensatzes ist grundsätzlich unterrepräsentiert aufgrund der geringsten Anzahl an Datenpunkten. Daher werden typischerweise auch alle beziehungsweise fast alle Datenpunkte dieses Clusters zum Abtasten des Clusters benötigt, um den Cluster hinreichend zu definieren beziehungsweise zu charakterisieren.

Bevorzugt umfasst das Verfahren das zufällige Auswählen der Datenpunkte aus dem kleinsten Cluster und/oder den übrigen Clustern für den Trainingsdatensatz. Dies ist ein besonders schnelles Verfahren, womit in kürzester Zeit automatisiert eine Gleichverteilung des Trainingssatzes erzielt werden kann. In anderen Ausführungen kann die Auswahl auch nach zeitlichen Kriterien erfolgen.

In besonderer Ausführungsform umfasst das Verfahren das Auswählen der Datenpunkte aus dem kleinsten Cluster und/oder der übrigen Cluster derart, dass die ausgewählten Datenpunkte eines Clusters einen maximalen Abstand voneinander aufweisen. Durch das Abstandskriterium werden redundante Daten entfernt und so die relevanten Daten zur Definition beziehungsweise zur Abdeckung des Clusters beibehalten. Insbesondere wird mit anderen Worten eine größtmögliche Spreizung des Clusters erzielt. Die Auswahl der Datenpunkte erfolgt somit einem Relevanzkriterium.

Das Verfahren umfasst ein Trainieren eines Algorithmus für maschinelles Lernen mittels des erzeugten Trainingsdatensatzes. Ein solches Training kann Aufschluss darüber geben, ob der erstellte Trainingsdatensatz noch nachgebessert werden kann beziehungsweise muss. Als Algorithmus für maschinelles Lernen kommt insbesondere ein künstliches neuronales Netzwerk in Betracht, wobei die Erfindung nicht darauf beschränkt ist und auch andere einschlägige Algorithmen für maschinelles Lernen Anwendung finden. Überwachtes Training mit vorgegebenen Soll-Resultaten wird bevorzugt für das Training angewendet. Um einen optimalen Arbeitspunkt des Algorithmus für maschinelles Lernen zu erreichen, werden die Testdaten der nicht-ausgewählten Datenpunkte verwendet. Mit den Testdaten kann eine Überanpassung, auch Überfitting genannt, des Algorithmus für maschinelles Lernen vermieden werden.

Das Verfahren umfasst das Ermitteln der Performanz der einzelnen Cluster mittels eines Gütekriteriums unter Verwendung von Validierungsdaten. Durch die Lokalisierung der Performanz der einzelnen Cluster, also zum Beispiel Güte beziehungsweise Genauigkeit der jeweils einzelnen Cluster, kann somit geprüft werden, ob die für den jeweiligen Cluster verwendeten Datenpunkte hinreichend waren oder ob die Datenpunkte für diesen Cluster erhöht und somit verdichtet werden müssen.

Es erfolgt das Ermitteln der Performanz der einzelnen Cluster durch die Datenpunkte aus der Gruppe der nicht-ausgewählten Datenpunkte der zugehörigen Cluster. Wenn ein Datenpunkt als Validierungsdatum aus einem bestimmten Cluster entnommen wurde und zur Validierung verwendet wird, so kann das Validierungsergebnis besonders Aufschluss über die Performanz des dazugehörigen Clusters geben. Die vorher nicht-ausgewählten Datenpunkte sind somit vorteilhaft sensitiv beziehungsweise selektiv für diejenigen Cluster, aus welchen sie entnommen wurden. Wenn Datenpunkte aus dem kleinsten Cluster entnommen wurden, so kann auch vorteilhaft dieser kleinste Cluster hinsichtlich seiner Performanz geprüft werden.

Bevorzugt kann das Gütekriterium eine über einem Schwellwert liegende mittlere quadratische Abweichungen von einem Ausgabewert bezogen auf den Sollwert sein. In bestimmten Fällen kann als Gütekriterium auch eine bestimmte Anzahl derartigen Schwellwertüberschreitungen verwendet werden. Die mittlere quadratische Abweichung und insbesondere die Schwellüberschreitungen stellen ein sensitives Maß für die Performanz der einzelnen Cluster dar.

Das Verfahren umfasst das Erstellen eines modifizierten Trainingsdatensatzes durch Hinzufügen von Datenpunkten zu einem Cluster, für welchen das Gütekriterium nicht erfüllt ist. Dadurch können punktuell beziehungsweise lokal einzelne Cluster nachgebessert werden, das heißt deren Statistik beziehungsweise Datenpunktdichte verbessert werden, um deren Performanz punktuell beziehungsweise gezielt zu verbessern. Der Vorteil besteht darin, dass nur bei denjenigen Clustern nachgebessert wird, bei welchen ein Gütekriterium nicht erfüllt ist und somit ein effiziente Nachbesserung ermöglicht wird, da die bereits performanten Cluster nicht geändert werden.

Die hinzugefügten Datenpunkte werden aus der Gruppe der nicht-ausgewählten Datenpunkte des zugehörigen Clusters entnommen, für welchen das Gütekriterium nicht erfüllt ist. Dadurch können die zuvor nicht-ausgewählten Datenpunkte gezielt wiederverwertet werden, um die einzelnen Cluster aufzuwerten durch Verdichtung beziehungsweise höhere Repräsentation. Insbesondere sind durch die nicht-ausgewählten Datenpunkte besonders geeignete Datenpunkte für jeden Cluster vorhanden, so dass stets passende Datenpunkte im Datenpool bereitstehen.

In einer besonderen Ausführungsform der Erfindung umfasst das Verfahren das Wiederholen des Modifizierens des Trainingsdatensatzes, bis das Gütekriterium für alle Cluster erfüllt ist. Die obigen Schritte umfassend die Performanz-Prüfung können somit solange ausgeführt werden, bis alle Cluster die Gütekriterien erfüllen.

Somit hat man ausgehend von dem Basistrainingsdatensatz einen performanten Trainingsdatensatz erzeugt, welcher jedes Szenario nach Gütekriterien abbildet beziehungsweise in jedem Cluster performant ist. Dennoch kann durch die Einsparung an redundanten Datenpunkten deutlich Rechenzeit eingespart werden durch die oben beschriebene systematische, automatisierte Erstellung des Trainingsdatensatzes, wie bereits in den vorigen Abschnitten beschrieben.

Ein weiterer Aspekt der Erfindung umfasst eine Steuereinheit für ein Fahrzeug, welche dazu eingerichtet ist, das Verfahren zum Betrieb des Lenkrads nach einem der obigen Ansprüche auszuführen. Die Vorteile ergeben sich aus den obigen Ausführungen.

Ein weiterer Aspekt der Erfindung umfasst ein Fahrzeug, umfassend eine Steuereinheit nach obigen Ausführungen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figuren 1 bis 6: Schritte eines Verfahrens zum Betrieb eines Lenkrads gemäß Ausführungsformen der Erfindung und
- Figur 7: schematisch eine erfindungsgemäße Steuereinheit.

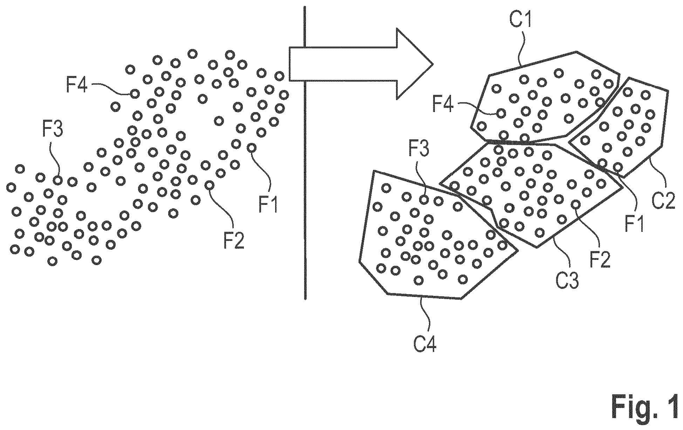

Die Figuren 1 bis 6 zeigen ein Verfahren zur Aufbereitung beziehungsweise Erzeugung eines Trainingsdatensatzes, für maschinelles Lernen zum Betrieb eines Lenkrads.

Figur 1 zeigt illustrativ einen ersten Verfahrensschritt, in welchem eine Vielzahl multidimensionaler Datenpunkte F1, ..., Fn bereitgestellt wird, siehe dazu die linke Seite der Figur 1. Die Datenpunkte F1, ..., Fn sind Messdatenpunkte, beispielsweise durch entsprechende Sensoren gemessen beziehungsweise aufgezeichnet. Auch ein Server kann zuvor gemessene Messdatenpunkte bereitstellen. Ein Datenpunkt, beispielsweise Datenpunkt F1, kann als ein Vektor dargestellt werden mit entsprechenden kinematischen beziehungsweise physikalischen Einträgen. Jeder Eintrag kann einen numerischen Wert und Dimension umfassen. Auch der Fall, dass der Vektor nur eine Komponente aufweist, ist mitoffenbart durch die vorliegende Erfindung. Die jeweiligen Größen können beispielsweise eine Fahrzeuggeschwindigkeit, Lenkmoment, Querbeschleunigung, Gierrate, Lenkradwinkelgeschwindigkeit, Reifendruck oder aber auch Fahrtrajektorien oder Fahrtrajektorienabschnitte sein, wobei die Erfindung nicht darauf beschränkt ist.

In einem weiteren Schritt, siehe dazu die rechte Seite der Figur 1 zur Veranschaulichung, wird ein Basistrainingsdatensatz erstellt. Dieser Schritt erfolgt durch Aufteilen der Vielzahl von Datenpunkte F1, ..., Fn in multidimensionale Cluster C1, ..., Cm. Dazu wird ein Cluster-Algorithmus verwendet, welcher jeden Datenpunkt F1, ..., Fn genau einem Cluster C1, ..., Cm zuordnet. Mit anderen Worten ausgedrückt werden die Datenpunkte F1, ..., Fn gemäß erkannter Szenarien in Cluster gruppiert. Jedes Cluster C1, ..., Cm bildet somit ein bestimmtes Szenario. Ein Szenario kann hier als eine eindeutig trennbare Teilmenge aus der gesamten, unstrukturierten Datenbasis der Datenpunkt F1, ..., Fn angesehen werden, man vergleiche dazu die linke Seite der Figur 1 mit der rechten Seite. Das bedeutet, dass Szenarien durch die multidimensionalen Eingänge des Cluster-Algorithmus beschrieben und differenziert werden können. Dadurch werden so automatisiert relevante Arbeitsbereiche extrahiert.

In dem vorliegenden Beispiel, welches lediglich der Illustration dient, werden die Datenpunkte F1, ..., Fn auf vier verschiedene Cluster C1, C2, C3, C4 verteilt beziehungsweise aufgeteilt. Rein beispielhaft sind demnach vier verschiedene Szenarien vorliegend. Die Cluster C1, C2, C3, C4 sind ferner disjunkt, das heißt, jedem Datenpunkt F1, ..., Fn wird genau ein Cluster C1, C2, C3, C4 zugewiesen. In der Praxis hat man es mit einer Anzahl von Datenpunkten und/oder Clustern zu tun, welche das obige Beispiel um Größenordnungen übersteigen kann.

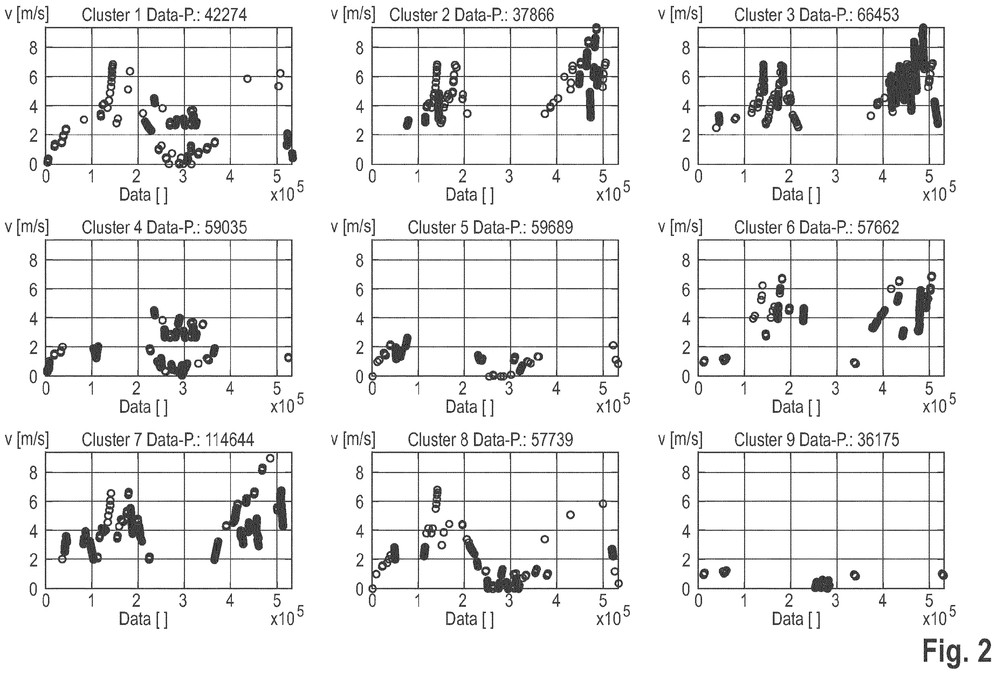

Figur 2 zeigt reale Daten, in Ergänzung zu der Figur 1, zur weiteren Veranschaulichung der obigen Beschreibung. Hierbei sind jeweils verschiedene Cluster, in diesem konkreten Beispiel Cluster 1 bis Cluster 9, gezeigt, welche jeweils einem Cluster zugewiesene Daten zeigen. Die Zuordnung ist, wie oben beschrieben, durch einen Cluster-Algorithmus erfolgt, bevorzugt durch den k-means-Algorithmus. Jedes Cluster C1, ..., C9 bildet hierbei ein bestimmtes Szenario aus. In dem vorliegenden Beispiel ist als physikalische beziehungsweise kinematische Größe die Fahrzeuggeschwindigkeit v gezeigt, wobei die Erfindung nicht darauf beschränkt ist. Alternativ können die bereits zuvor erwähnten Größen wie Reifendruck, Lenkmoment, Lenkgeschwindigkeit et cetera verwendet werden. Ferner ist hier auch nur diese eine Komponente eines Vektors gezeigt, während bei mehrdimensionalen Datenpunkten F1, ..., Fn sich ein entsprechender, graphisch nicht darstellbarer multidimensionaler Cluster ausbildet. Erkennbar ist ferner, dass die Anzahl der Datenpunkte, wie in Figur 1 illustriert, von Cluster zu Cluster unterschiedlich ist. Das bedeutet, dass manche Cluster statistisch gegenüber anderen Clustern über- beziehungsweise unterrepräsentiert sind.

Die Anzahl der Datenpunkte innerhalb des kleinsten Clusters, hier beispielsweise des Clusters 9, stellt somit ein Szenario dar, welches im Vergleich zu allen anderen Teilmengen (Clustern) im gesamten Datensatz unterrepräsentiert ist.

Redundanzen, also im Wesentlichen Mehrfachbeschreibungen eines Datenpunktes, können bei den größeren Clustern erkannt werden, man siehe dazu beispielsweise insbesondere die Cluster 3 und 7. Solche Redundanzen werden durch die folgenden Schritte gemindert beziehungsweise eliminiert.

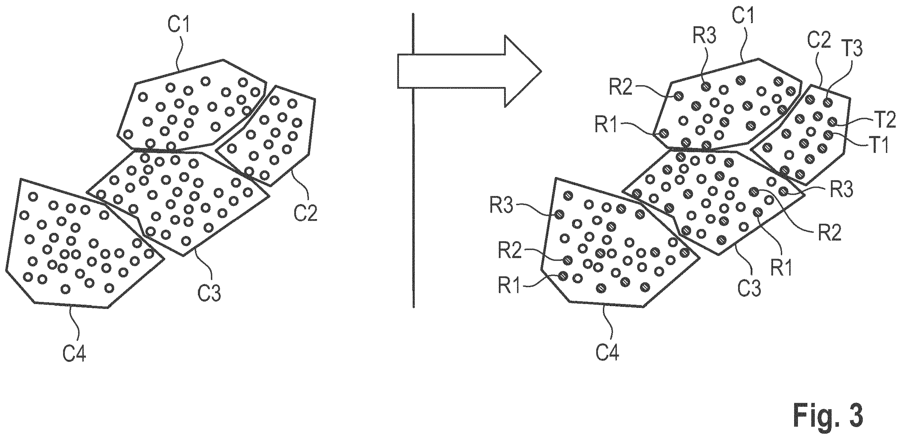

Figur 3 zeigt illustrativ einen Verfahrensschritt, in welchem ein Trainingsdatensatz durch Auswahl von Datenpunkten aus dem Basistrainingsdatensatz erstellt wird. Das Verfahren umfasst dabei das Ermitteln eines kleinsten Clusters. In dieser lediglich illustrativen Darstellung entspricht der kleinste Cluster beispielhaft dem Cluster C2 unter der Vielzahl von Clustern C1, C2, C3, C4. Der kleinste Cluster umfasst die geringste Anzahl von Datenpunkten. In der Figur 2 beispielsweise entspricht der Cluster 9 dem kleinsten Cluster unter der Gruppe der Cluster 1 bis 9.

In einem weiteren Schritt erfolgt das Auswählen mindestens einer Teilmenge der Datenpunkte T1, T2, T3, ... ,Tk des kleinsten Clusters C2 für den Trainingsdatensatz, siehe dazu illustrativ die markierten beziehungsweise hervorgehobenen Datenpunkte in Cluster C2 auf der rechten Seite von Figur 3. In dem vorliegenden Fall wird ein Anteil, beziehungsweise eine Teilmenge, hier beispielhaft von 90 %, der Datenpunkte des kleinsten Clusters C2 für den Trainingsdatensatz ausgewählt. Dies hat den Vorteil, dass ein dazu komplementärer Anteil, in dem vorliegenden Beispiel 10 %, als Test- und/oder Validierungsdaten für einen Algorithmus für maschinelles Lernen in einem entsprechenden Datenspeicher abgespeichert und verwendetet werden können, siehe dazu die untere Beschreibung.

Die Auswahl der Teilmenge der Datenpunkte T1, T2, T3, ... ,Tk des kleinsten Clusters kann beispielsweise zufällig, also gemäß eines Zufallsprozesses, gewählt werden. Dies stellt einen besonders schnellen Auswahlprozess dar, welcher zeiteffektiv ist. Bevorzugt kann eine Auswahl jedoch gemäß einer Relevanzmetrik erfolgen. Beispielsweise kann die Auswahl der Datenpunkte T1, ..., Tk aus dem kleinsten Cluster derart erfolgen, dass die ausgewählten Datenpunkte T1, ..., Tk des kleinsten Clusters einen maximalen Abstand voneinander aufweisen. Dadurch werden Redundanzen im kleinsten Cluster effektiv eliminiert. Ferner bilden die nach diesem Kriterium ausgewählten Datenpunkte T1, ..., Tk den mehrdimensionalen Cluster geometrisch in seiner Ausdehnung geeignet aus, was wiederum die Performanz des Algorithmus für maschinelles Lernen in der Anwendung verbessert. Mit anderen Worten ausgedrückt werden durch die nach diesem Kriterium ausgewählten Datenpunkte T1, ..., Tk eine größtmögliche Spreizung des Clusters bewirken, so dass der Cluster effektiv definiert wird ohne oder zumindest mit nur geringfügigen Redundanzen.

In einer weiteren Ausführungsform kann auch, hier nicht ausdrücklich gezeigt, das Auswählen der Gesamtheit aller Datenpunkte des kleinsten Clusters für den Trainingsdatensatz erfolgen. Dies ist insbesondere dann von Vorteil, wenn die Anzahl der Datenpunkte derart ist, dass letztlich jeder dieser Datenpunkte T1, .., Tk für eine hinreichende Cluster-Performanz des kleinsten Clusters benötigt wird, siehe dazu die folgenden Beschreibungen.

In einem weiteren Schritt erfolgt das Auswählen einer Teilmenge von Datenpunkten R1, ..., Rk aus jedem der übrigen Cluster C1, C3, C4 für den Trainingsdatensatz. Die Auswahl erfolgt dabei derart, dass die Anzahl der ausgewählten Datenpunkte R1, ..., Rk jedes übrigen Clusters, in der Figur 3 die Cluster C1, C3, C4, der Anzahl der ausgewählten Datenpunkte T1, ..., Tk des kleinsten Clusters C2 entspricht. Die Anzahl der Datenpunkte jedes Clusters C1, ..., Cm ist somit untereinander identisch und demnach insbesondere identisch mit der Anzahl der aus dem kleinsten Cluster ausgewählten Datenpunkte T1, ..., Tk. Die Anzahl der ausgewählten Datenpunkte des kleinsten Clusters legt somit die Anzahl der ausgewählten Datenpunkte R1, ..., Rk jedes der übrigen Cluster identisch fest.

Die Erfindung hat somit die vorteilhafte Eigenschaft, dass ein gleichverteilter, automatisch generierter Trainingsdatensatz über die verschiedenen Szenarien erzeugt wird, was performanzfördernd ist und somit insbesondere auch beim Betrieb von Fahrzeugkomponenten von Bedeutung ist. Die Orientierung am kleinsten Cluster erfolgt mit der Kenntnis, dass dieses Szenario im Vergleich zu den anderen Clustern unterrepräsentiert ist aufgrund der geringen Anzahl an Datenpunkten. In dem erzeugten Trainingsdatensatz wird der vormals unterrepräsentierte Cluster in gleicher Weise repräsentiert wie die anderen Cluster. Die Zusammenstellung erfolgt dabei allein auf Basis der Anzahl der jeweiligen Datenpunkte.

Die Reduktion der Datenpunkte in den übrigen Clustern bewirkt ferner eine reduzierte Trainingszeit. Eine solche Reduktion kann bei großen Clustern erheblich sein. Je nach Clustergrößen können hierbei gemäß Feldstudien bis zu 40-mal geringere Rechenzeiten erreicht werden. Dies ist ferner bedeutsam für den Betrieb von Fahrzeugkomponenten.

Ähnlich zu dem kleinsten Cluster kann mit den nicht-ausgewählten Datenpunkten folgendermaßen verfahren werden. Die nicht-ausgewählten Datenpunkte der übrigen Cluster können in einem Datenspeicher abgelegt werden. Diese Datenpunkte können dann ebenfalls als Testdaten und/oder als Validierungsdaten verwendet werden. Neben der Gleichverteilung der Szenarien wird durch das Auswählen gleichzeitig auch eine hohe Test- und Validierungsdatenmenge bereitgestellt.

Das Auswählen der Datenpunkte aus den übrigen Clustern C1, ..., Ci-1, Ci+1, ..., Cm kann ebenfalls zufällig erfolgen, um weitere Rechenzeit zu sparen. Bevorzugt wird, wie oben beschrieben, das Auswählen der Datenpunkte R1, ..., Rk der übrigen Cluster C1, ..., Ci-1, Ci+1, ..., Cm derart erfolgen, dass die ausgewählten Datenpunkte eines Clusters einen maximalen Abstand voneinander aufweisen. Dadurch werden insbesondere redundante Datenpunkte entfernt und die den Cluster definierenden relevanten Datenpunkte dem Trainingsdatensatz beigefügt.

Dieser Trainingsdatensatz kann bevorzugt unter der Verwendung von Testdaten der nicht-ausgewählten Fahrzeugdaten zur Vermeidung von Überanpassung beziehungsweise zur Findung des optimalen Arbeitspunktes eingesetzt werden, um einen Algorithmus für maschinelles Lernen, insbesondere ein künstliches neuronales Netzwerk, zu trainieren.

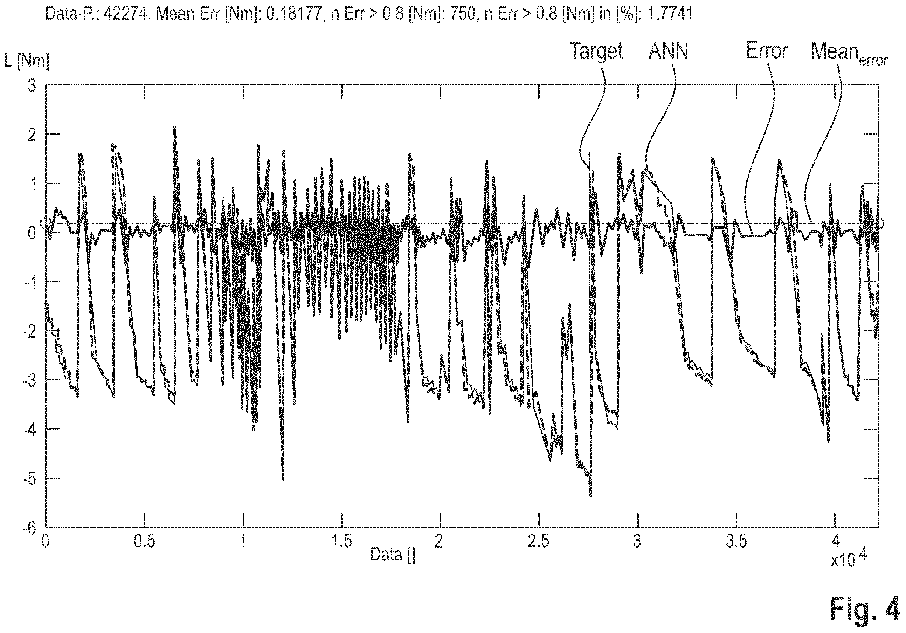

Figuren 4 bis 6 zeigen weitere Schritte des Verfahrens zur Verbesserung des zusammengestellten Trainingsdatensatzes zum Betrieb eines Lenkrads eines Fahrzeugs.

Dazu wird in einem ersten Schritt ein Algorithmus für maschinelles Lernen, beispielsweise ein künstliches neuronales Netzwerk, mittels des erzeugten Trainingsdatensatzes trainiert. Wie oben bereits beschrieben können beim Training Testdaten zum Einsatz kommen. Diese Testdaten dienen dazu, den optimalen Arbeitspunkt beim Trainieren zu finden und eine Überanpassung des neuronalen Netzwerks zu verhindern. Als Testdaten können nun vorteilhafte Teilmengen der Gruppe der nicht-ausgewählten Datenpunkte verwendet werden. Die Erfindung hat hierbei den Vorteil, dass durch die oben beschriebene Zusammenstellung des Trainingsdatensatzes solche Testdaten in großer Zahl zur Verfügung stehen, so dass dadurch der optimale Zeitpunkt für den Trainingsabbruch scharf festgelegt werden kann.

Mittels Validierungsdaten wird dann die Performanz, das heißt die Leistungsfähigkeit, der einzelnen Cluster C1, ..., Cm getestet, wie es beispielhaft in der Figur 4 gezeigt wird.

In der Figur 4 ist dazu das Resultat eines Performanz-Tests eines ersten Clusters C1 gezeigt. In der Figur 4 ist dazu ein Lenkmoment L mittels der Validierungspunkte bestimmt. Die Graphen zeigen dabei die Ausgaben des trainierten künstlichen neuronalen Netzwerks als Beispiel eines Algorithmus für maschinelles Lernen unter Verwendung von Validierungsdaten als Input. Die Ausgaben des künstlichen neuronalen Netzwerks sind dabei mit den bekannten Sollwerten beziehungsweise Targetwerten des Lenkmoments der Validierungsdaten gemeinsam aufgetragen.

Die Güte der Performanz des Clusters wird hierbei mittels eines Gütekriteriums bestimmt. In dem vorliegenden Fall kann vorteilhaft die mittlere quadratische Abweichung, Mean Err, der Ausgabe des Algorithmus für maschinelles Lernen, ANN, mit den zugehörigen Sollwerten, Target, herangezogen werden. Dadurch wird der mittlere Fehler, Mean Err, des Algorithmus für maschinelles Lernen quantifiziert. Als ein weiteres besonders sensitives Gütekriterium kann die Anzahl, n Err, der über einem Schwellwert liegenden mittleren quadratischen Abweichung von Soll- und Ausgabewerten bestimmt werden. In dem vorliegenden Beispiel zeigt der Graph beispielhaft 42.274 Datenpunkte, einen mittleren Fehler von 0,18177 Nm sowie eine Anzahl der Schwellwertüberschreitungen von 750 an, wobei diese Zahlenbeispiele nur zur Illustration der Erfindung angefügt sind.

Es wird in diesem Zusammenhang betont, dass die Auflösung der Performanz der einzelnen Cluster dadurch gelingt, dass Datenpunkte der jeweiligen zugeordneten Cluster als Validierungsdaten verwendet werden. Diese Validierungsdaten sind aus der Gruppe der nicht-ausgewählten Datenpunkte dieser zugehörigen Cluster entnommen. Die Erfindung hat somit den weiteren Vorteil, dass durch die Auswahl und damit einhergehende Reduktion der Datenpunkte in den Clustern beim Zusammenstellen des Trainingsdatensatzes eine Vielzahl von Validierungsdaten bereitgestellt werden kann. Diese können insbesondere jedem Cluster beziehungsweise jedem Szenario unmittelbar zugeordnet werden. Dadurch kann die oben beschriebene cluster-bezogene Performanz ermittelt werden. Im Versagensfall kann somit der jeweilige Cluster lokalisiert beziehungsweise aufgefunden werden, wie in der Figur 4 für den Cluster 1 gezeigt.

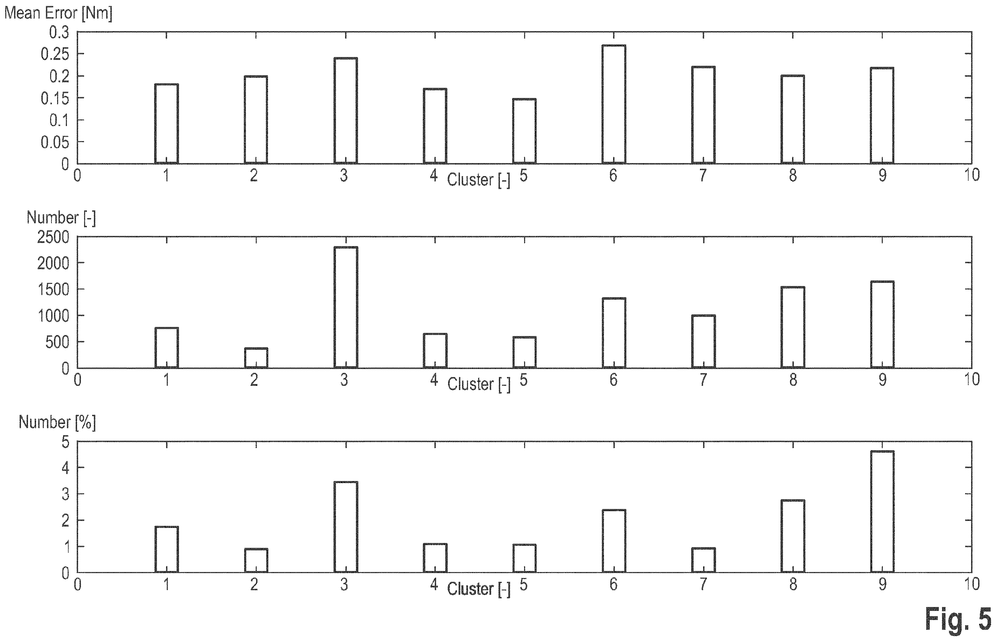

Die Prüfung der cluster-bezogenen Performanz wird ferner in der Figur 5 weiter deutlich gemacht, in welcher die ermittelte Performanz für die verschiedenen Cluster, also clusterspezifisch, zusammengetragen wird. In dem vorliegenden Beispiel sind neun verschiedene Cluster aufgelistet, für welche jeweils eine Güteprüfung gemäß der im Zusammenhang mit Figur 4 beschriebenen Art und Weise erfolgt ist. Hierbei sind rein beispielhaft die Gütegrößen mittlerer quadratischer Fehler, Mean Error, (erste Zeile), Anzahl der Schwellwertüberschreitungen, Number, sowie die Schwellwertüberschreitungen in Prozent angegeben.

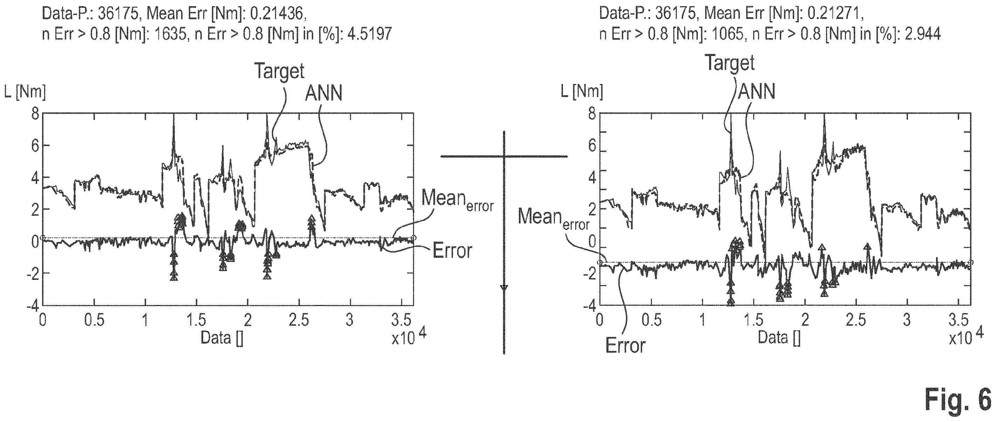

Figur 6 illustriert einen weiteren Aspekt des Verfahrens, in welchem das Ergebnis einer weiteren Verbesserung des Trainingsdatensatzes gezeigt ist.

Wenn ein Gütekriterium eines oder mehrerer Cluster nicht erfüllt ist, dann werden für diese Cluster zusätzliche Datenpunkte dem Trainingsdatensatz hinzugefügt. Der Trainingsdatensatz wird somit modifiziert. Beispielsweise wird in einem oder mehreren Clustern gemäß des obigen Performanz-Tests festgestellt, dass eine oder zu viele Schwellwertüberschreitungen in der mittleren quadratischen Abweichungen vorgelegen haben, je nach Definition des Gütekriteriums.

Dann wird, da der Ausfall beziehungsweise Versagensfall einem Cluster oder den betreffenden Clustern zugewiesen werden kann (siehe zum Beispiel Figur 4 und 5), die Anzahl der Datenpunkte dieser Cluster erhöht. Dies wird mittels der nicht-ausgewählten Datenpunkte genau aus diesen betreffenden Clustern erfolgen. Vorteilhaft kann so selektiv die Performanz einzelner Cluster verbessert werden. Dadurch wird eine automatische Rückkopplung erzielt.

Nach Hinzufügen der zusätzlichen Datenpunkte können obige Schritte des Trainierens und des Prüfens der Performanz der einzelnen Cluster, insbesondere der betroffenen Cluster, wiederholt durchgeführt werden, wobei hier auf die obigen Ausführungen und Beschreibungen verwiesen wird.

In der Figur 6 ist nun das Ergebnis einer solchen Nachbesserung des Trainingsdatensatzes für einen bestimmten Cluster, hier Cluster 9, gezeigt. Linker Teil zeigt beispielhaft den Performanz-Test des Clusters des ursprünglich zusammengestellten Trainingsdatensatzes. Rechter Teil zeigt die Performanz des gleichen Clusters eines mittels einzelner Datenpunkte nachgebesserten Trainingsdatensatzes gemäß den obigen Beschreibungen.

Der mit dem Nachtraining nachgebesserte Cluster zeigt im Performanz-Test eine geringer mittlere Abweichung, Mean Err, des Ausgabewerts, ANN, vom Sollwert, Target, im Vergleich zum ursprünglich zusammengestellten Cluster. Insbesondere ist dabei die Anzahl, n Err, der Schwellwertüberschreitungen um ein Vielfaches abgesenkt, siehe dazu auch die durch Dreiecke angezeigten Markierungen der Schwellwertüberschreitungen im Vergleich. Die Anzahl der Schwellwertüberschreitungen ist somit ein sehr sensitives Maß zur Bewertung der Performanz.

Die oben beschriebene Modifizierung des Trainingsdatensatzes kann sukzessive wiederholt werden, um die Performanz der einzelnen Cluster sukzessive zu verbessern. Insbesondere kann dies solange wiederholt werden, bis alle Cluster das gesetzte Gütekriterium erfüllen. Dadurch wird ein hochgradig performanter Algorithmus erzeugt. Beispielsweise kann die Nachbesserung erfolgen, bis kein Cluster mehr eine Schwellwertüberschreitung im Performanz-Test zeigt. Das Verfahren ermöglicht somit eine sukzessive und automatische Verbesserung des Trainingsdatensatzes, bis der modifizierte Trainingsdatensatz das oder die Gütekriterien in allen Clustern erfüllt. Diese Nachbesserungsschleife kann automatisch erfolgen, ohne dass ein immanenter Eingriff erforderlich ist.

Durch das beschriebene Verfahren kann ein hochgradig performanter Algorithmus für maschinelles Lernen bereitgestellt werden. Die Ausgabe dieses mit den obig beschriebenen besonderen Eigenschaften behafteten Algorithmus für maschinelles Lernen wird dann vorteilhaft zum Betrieb eines Lenkrads eines Fahrzeugs verwendet. Die Steuerung beziehungsweise Regelung beziehungsweise der Betrieb des Lenkrads erfolgt dabei in Antwort auf die Ausgabe des hoch performanten, gemäß dem Lernverfahren trainierten Algorithmus für maschinelles Lernen.

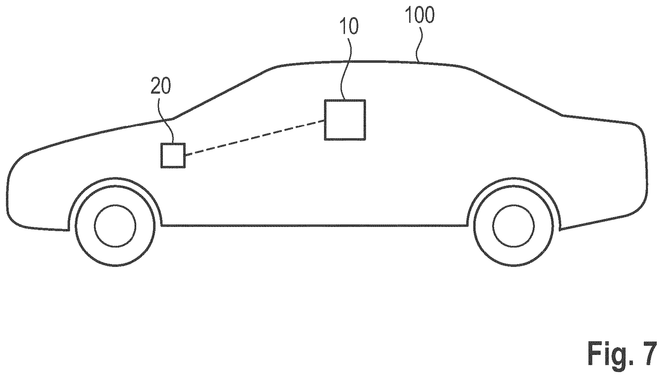

Figur 7 zeigt schematisch eine erfindungsgemäße Steuereinheit 10. Die Steuereinheit 10 ist dabei dazu eingerichtet, das oben beschriebene Verfahren auszuführen. Insbesondere betreibt die Steuereinheit 10 ein Lenkrad 20 in Antwort beziehungsweise basierend auf eine Ausgabe des obigen Algorithmus für maschinelles Lernen. Die Steuereinheit 10 kann auch ein Teil des Lenkrads 20 sein. Die Steuereinheit 10 verwendet die Ausgabe des Algorithmus für maschinelles Lernen zur Lenkmomentapproximation, wie es bei Steer-by-Wire-Systemen erforderlich ist. Der durch das Verfahren gebildete Trainingsdatensatz in seinen verschiedenen Ausführungen erhöht die Performanz des Algorithmus für maschinelles Lernen. Die Aspekte des Verfahrens bewirken somit unmittelbar eine Verbesserung des Betriebs des Lenkrads 20.

### Bezugszeichenliste

- 10: Steuereinheit
- 20: Lenkrad
- 100: Fahrzeug
- F1, ..., Fn: Datenpunkte
- C1, ..., Cm: Cluster
- T1, ..., Tk: ausgewählte Datenpunkte des ersten Clusters
- R1, ..., Rk: ausgewählte Datenpunkte der übrigen Cluster

## Patentansprüche

1. Verfahren zum Betrieb eines Lenkrads (20) eines Fahrzeugs (100) durch eine Steuereinheit (10) unter Verwendung einer Ausgabe eines Algorithmus für maschinelles Lernen zur Lenkmoment Approximation, umfassend:
- Bereitstellen einer Vielzahl von multidimensionalen, das Fahrzeug betreffenden, Messdatenpunkten (F1, ..., Fn), welche physikalische und/oder kinematische Daten zur Bestimmung eines Lenkmoments umfassen;
- Erzeugen eines Basistrainingsdatensatzes durch Aufteilen der Vielzahl von Datenpunkten (F1, ..., Fn) in multidimensionale Cluster (C1, ..., Cm) unter Verwendung eines Cluster-Algorithmus derart, dass jeder Datenpunkt (F1, ..., Fn) genau einem Cluster (C1, ..., Cm) zugeordnet wird;
- Erzeugen eines Trainingsdatensatzes durch Auswahl von Datenpunkten aus dem Basistrainingsdatensatz, umfassend:
- Ermitteln eines kleinsten Clusters (Ci) unter der Vielzahl von Clustern (C1, ..., Cm) mit der geringsten Anzahl von Datenpunkten;
- Auswählen mindestens einer Teilmenge der Datenpunkte (T1, ..., Tk) des kleinsten Clusters (Ci) für den Trainingsdatensatz; und
- Auswählen einer Teilmenge von Datenpunkten (R1, ..., Rk) aus jedem der übrigen Cluster (C1, ..., Ci-1, Ci+1, ..., Cm) für den Trainingsdatensatz derart, dass die Anzahl der ausgewählten Datenpunkte (R1, ..., Rk) jedes übrigen Clusters (C1, ..., Ci-1, Ci+1, ..., Cm) der Anzahl der ausgewählten Datenpunkte (T1, ..., Tk) des kleinsten Clusters (Ci) entspricht;
- Abspeichern der nicht-ausgewählten Datenpunkte des kleinsten Clusters (Ci) und/oder der übrigen Cluster (C1, ..., Ci-1, Ci+1, ..., Cm) in einem Datenspeicher als Validierungsdaten für den Algorithmus für maschinelles Lernen;
- Trainieren des Algorithmus für maschinelles Lernen mittels des erzeugten Trainingsdatensatzes;
- Ermitteln der Performanz der einzelnen Cluster (C1, ..., Cm) mittels eines Gütekriteriums unter Verwendung der Validierungsdaten aus der Gruppe der nicht-ausgewählten Datenpunkte der jeweiligen Cluster;
- Erstellen eines modifizierten Trainingsdatensatzes durch Hinzufügen von Datenpunkten zu einem Cluster, für welchen das Gütekriterium nicht erfüllt ist, wobei die hinzugefügten Datenpunkte aus der Gruppe der nicht-ausgewählten Datenpunkte desjenigen Clusters entnommen werden, für welchen das Gütekriterium nicht erfüllt ist;
- Verwenden der Ausgabe des mit dem modifizierten Trainingsdatensatz trainierten Algorithmus für maschinelles Lernen zur Lenkmomentapproximation.

2. Verfahren nach Anspruch 1, ferner umfassend das Abspeichern der nicht-ausgewählten Datenpunkte des kleinsten Clusters (Ci) und/oder der übrigen Cluster (C1, ..., Ci-1, Ci+1, ..., Cm) in einem Datenspeicher als Testdaten für den Algorithmus für maschinelles Lernen.

3. Verfahren nach einem der Ansprüche 1 bis 2, ferner umfassend das Auswählen der Gesamtheit aller Datenpunkte (R1, ..., Rk) des kleinsten Clusters (Ci) für den Trainingsdatensatz.

4. Verfahren nach einem der Ansprüche 1 bis 3, wobei das Auswählen der Datenpunkte aus dem kleinsten Cluster (Ci) und/oder den übrigen Clustern (C1, ..., Ci-1, Ci+1, ..., Cm) zufällig erfolgt.

5. Verfahren nach einem der Ansprüche 1 bis 3, wobei das Auswählen der Datenpunkte aus dem kleinsten Cluster (Ci) und/oder der übrigen Cluster (C1, ..., Ci-1, Ci+1, ..., Cm) derart erfolgt, dass die ausgewählten Datenpunkte eines Clusters einen maximalen Abstand voneinander aufweisen.

6. Verfahren nach einem der Ansprüche 1 bis 5, wobei das Gütekriterium eine über einem Schwellwert liegende mittlere quadratische Abweichung von einem Ausgabewert für das approximierte Lenkmoment bezogen auf den Lenkmomentsollwert umfasst.

7. Verfahren nach einem der Ansprüche 1 bis 6, ferner umfassend das Wiederholen des Modifizierens des Trainingsdatensatzes, bis das Gütekriterium für alle Cluster (C1, ..., Cm) erfüllt ist.

8. Steuereinheit (10) für ein Fahrzeug (100), dazu eingerichtet, das Verfahren nach einem der Ansprüche 1 bis 7 auszuführen.

9. Fahrzeug (100), umfassend eine Steuereinheit (10) gemäß Anspruch 8.

## Claims

1. Method for operating a steering wheel (20) of a vehicle (100) by a control unit (10) using an output of a machine learning algorithm for steering torque approximation, comprising:
- providing a plurality of multidimensional measurement data points (F1, ..., Fn) relating to the vehicle, which comprise physical and/or kinematic data for determining a steering torque;
- generating a base training dataset by dividing the plurality of data points (F1, ..., Fn) into multidimensional clusters (C1, ..., Cm) using a clustering algorithm such that each data point (F1, ..., Fn) is assigned to exactly one cluster (C1, ..., Cm);
- generating a training dataset by selecting data points from the base training dataset, comprising:
- determining a smallest cluster (Ci) among the plurality of clusters (C1, ..., Cm) with the smallest number of data points;
- selecting at least a subset of the data points (T1, ..., Tk) of the smallest cluster (Ci) for the training dataset; and
- selecting a subset of data points (R1, ..., Rk) from each of the remaining clusters (C1, ..., Ci-1, Ci+1, ..., Cm) for the training dataset such that the number of selected data points (R1, ..., Rk) of each remaining cluster (C1, ..., Ci-1, Ci+1, ..., Cm) corresponds to the number of selected data points (T1, ..., Tk) of the smallest cluster (Ci);
- storing the non-selected data points of the smallest cluster (Ci) and/or the remaining clusters (C1, ..., Ci-1, Ci+1, ..., Cm) in a data store as validation data for the machine learning algorithm;
- training the machine learning algorithm using the generated training dataset;
- determining the performance of the individual clusters (C1, ..., Cm) by means of a quality criterion using the validation data from the group of non-selected data points of the respective clusters;
- creating a modified training dataset by adding data points to a cluster for which the quality criterion is not met, whereby the added data points are taken from the group of non-selected data points of the cluster for which the quality criterion is not met;
- using the output of the machine learning algorithm trained with the modified training dataset for steering torque approximation.

2. Method according to claim 1, further comprising storing the non-selected data points of the smallest cluster (Ci) and/or the remaining clusters (C1, ..., Ci-1, Ci+1, ..., Cm) in a data store as test data for the machine learning algorithm.

3. Method according to one of claims 1 to 2, further comprising selecting the totality of all data points (R1, ..., Rk) of the smallest cluster (Ci) for the training dataset.

4. Method according to any of claims 1 to 3, wherein the selection of the data points from the smallest cluster (Ci) and/or the remaining clusters (C1, ..., Ci-1, Ci+1, ..., Cm) is carried out randomly.

5. Method according to any of claims 1 to 3, wherein the selection of the data points from the smallest cluster (Ci) and/or the remaining clusters (C1, ..., Ci-1, Ci+1, ..., Cm) is carried out in such a way that the selected data points of a cluster have a maximum distance from one another.

6. Method according to any of claims 1 to 5, wherein the quality criterion comprises a mean square deviation from an output value for the approximated steering torque relative to the steering torque target value, which deviation is above a threshold value.

7. Method according to any of claims 1 to 6, further comprising repeating the modification of the training dataset until the quality criterion is met for all clusters (C1, ..., Cm).

8. Control unit (10) for a vehicle (100), configured to carry out the method according to any of claims 1 to 7.

9. Vehicle (100), comprising a control unit (10) according to claim 8.

## Revendications

1. Procédé permettant de faire fonctionner un volant de direction (20) d'un véhicule (100) par une unité de commande (10) en utilisant une sortie d'un algorithme pour l'apprentissage automatique pour l'approche par approximation d'un couple de direction, comprenant :
- la fourniture d'une pluralité de points de données de mesure (F1, ..., Fn) multidimensionnels concernant le véhicule, lesquels comprennent des données physiques et/ou cinématiques pour la détermination d'un couple de direction ;
- la génération d'un ensemble de données d'entraînement de base en divisant la pluralité de points de données (F1, ..., Fn) en grappes (C1, ..., Cm) multidimensionnelles en utilisant un algorithme de grappes de telle sorte que chaque point de données (F1, ..., Fn) est associé à exactement une grappe (C1, ..., Cm) ;
- la génération d'un ensemble de données d'entraînement en sélectionnant des points de données à partir de l'ensemble de données d'entraînement de base, comprenant :
- la détermination d'une plus petite grappe (Ci) parmi la pluralité de grappes (C1, ..., Cm) comportant le plus petit nombre de points de données ;
- la sélection d'au moins un sous-ensemble des points de données (T1, ..., Tk) de la plus petite grappe (Ci) pour l'ensemble de données d'entraînement ; et
- la sélection d'un sous-ensemble de points de données (R1, ..., Rk) de chacune des autres grappes (C1, ..., Ci-1, Ci+1, ..., Cm) pour l'ensemble de données d'entraînement de telle sorte que le nombre de points de données (R1, ..., Rk) sélectionnés de chaque autre grappe (C1, ..., Ci-1, Ci+1, ..., Cm) correspond au nombre de points de données (T1, ..., Tk) sélectionnés de la plus petite grappe (Ci) ;
- la mémorisation des points de données non sélectionnés de la plus petite grappe (Ci) et/ou des autres grappes (C1, ..., Ci-1, Ci+1, ..., Cm) dans une mémoire de données en tant que données de validation pour l'algorithme pour l'apprentissage automatique ;
- l'entraînement de l'algorithme pour l'apprentissage automatique à l'aide de l'ensemble de données d'entraînement généré ;
- la détermination de la performance des grappes (C1, ..., Cm) individuelles au moyen d'un critère de qualité en utilisant les données de validation provenant du groupe de points de données non sélectionnés des grappes respectives ;
- la création d'un ensemble de données d'entraînement modifié en ajoutant des points de données à une grappe pour laquelle le critère de qualité n'est pas satisfait, dans lequel les points de données ajoutés sont prélevés du groupe de points de données non sélectionnés de ladite grappe pour laquelle le critère de qualité n'est pas satisfait ;
- l'utilisation de la sortie de l'algorithme pour l'apprentissage automatique entraîné avec l'ensemble de données d'entraînement modifié pour l'approche par approximation du couple de direction.

2. Procédé selon la revendication 1, comprenant en outre la mémorisation des points de données non sélectionnés de la plus petite grappe (Ci) et/ou des autres grappes (C1, ..., Ci-1, Ci+1, ..., Cm) dans une mémoire de données en tant que données de test pour l'algorithme pour l'apprentissage automatique.

3. Procédé selon l'une des revendications 1 à 2, comprenant en outre la sélection de l'ensemble de tous les points de données (R1, ..., Rk) de la plus petite grappe (Ci) pour l'ensemble de données d'entraînement.

4. Procédé selon l'une des revendications 1 à 3, dans lequel la sélection des points de données de la plus petite grappe (Ci) et/ou des autres grappes (C1, ..., Ci-1, Ci+1, ..., Cm) est effectuée de manière aléatoire.

5. Procédé selon l'une des revendications 1 à 3, dans lequel la sélection des points de données de la plus petite grappe (Ci) et/ou des autres grappes (C1, ..., Ci-1, Ci+1, ..., Cm) est effectuée de telle sorte que les points de données sélectionnés d'une grappe présentent une distance maximale entre eux.

6. Procédé selon l'une des revendications 1 à 5, dans lequel le critère de qualité comprend un écart quadratique moyen supérieur à une valeur seuil par rapport à une valeur de sortie pour le couple de direction approché par approximation par rapport à la valeur de consigne de couple de direction.

7. Procédé selon l'une des revendications 1 à 6, comprenant en outre la répétition de la modification de l'ensemble de données d'entraînement jusqu'à ce que le critère de qualité soit satisfait pour toutes les grappes (C1, ..., Cm).

8. Unité de commande (10) pour un véhicule (100), configurée pour mettre en œuvre le procédé selon l'une des revendications 1 à 7.

9. Véhicule (100), comprenant une unité de commande (10) selon la revendication 8.
